Europäisches Patentamt

European Patent Office

Office européen des brevets

(11) Veröffentlichungsnummer : **0 086 900**
**B1**

(12) **EUROPÄISCHE PATENTSCHRIFT**

(45) Veröffentlichungstag der Patentschrift :
05.03.86

(21) Anmeldenummer : 82112006.0

(22) Anmeldetag : 24.12.82

(51) Int. Cl.⁴ : **F 16 L 37/12, F 16 L 33/26, H 02 G 3/06**

(54) Anschlussnippel aus Kunststoff für umfangsgerippte Isolierrohre.

(30) Priorität : **05.02.82 CH 699/82**

(43) Veröffentlichungstag der Anmeldung :
**31.08.83 Patentblatt 83/35**

(45) Bekanntmachung des Hinweises auf die Patenterteilung : **05.03.86 Patentblatt 86/10**

(84) Benannte Vertragsstaaten :
**AT BE DE FR GB IT NL SE**

(56) Entgegenhaltungen :
**CH-A- 379 854**
**DE-A- 2 505 620**
**US-A- 4 247 136**
**US-A- 4 248 459**

(73) Patentinhaber : **AGRO AG**
**Korbackerweg 7**
**CH-5502 Hunzenschwil (CH)**

(72) Erfinder : **Grossauer, Alfred**
**Marina-Park**
**CH-6362 Stansstad (CH)**

(74) Vertreter : **Willi, Anton, J.**
**Alsenmattstrasse 2**
**CH-8800 Thalwil (CH)**

Jouve, 18, rue St-Denis, 75001 Paris, France

## Beschreibung

Gegenstand der Erfindung ist ein Anschlussnippel aus Kunststoff für umfangsgerippte Isolierrohre.

Es sind Anschlussnippel für solche, der Aufnahme elektrischer Kabel dienende Isolierrohre bekannt, die ein in eine Wandausnehmung des Rohraufnahmestutzens des Nippels einsetzbares separates Sicherungselement aufweisen, das mit zum Eingriff in Umfangsrinnen des Isolierrohres bestimmten Vorsprüngen versehen ist. Bekannt ist z. B. ein bügelförmiges Sicherungselement, das nach dem Einführen des Isolierrohres durch die Wandausnehmung hindurch rittlings auf das Isolierrohr aufgesetzt wird, wo es mittels der Vorsprünge in Umfangsrillen des Rohres eingreift, während die elastischen Bügelschenkel die Wandausnehmung unterbrechende Stege formschlüssig hintergreifen und damit ein Lösen des Sicherungselementes ohne Werkzeug verunmöglichen. Abgesehen davon, dass ein solches sich über etwa 180° des Umfangs des Aufnahmestutzens erstreckendes Sicherungselement relativ kompliziert herzustellen ist, bedingt auch die Unterbrechung der Wandausnehmung durch Stege zur Verankerung des Elementes eine in Umfangsrichtung relativ grosse Wandausnehmung. Andere, z. B. aus der US-PS 4 248 459 bekannte Anschlussnippel besitzen durch achsparallele Schlitzung einer Endpartie des Stutzens geschaffene Sicherungszungen, die mit inneren Vorsprüngen versehen und am hinteren Ende und quer zur Nippelachse durch einen Biegestreifen an der Stutzenwand angelenkt sind und die mit ihrem freien Ende vom Biegestreifen spitzwinklig aus der Wandausnehmung herausragend ausser Wirkungslage gehalten sind. Mittels eines achsial über die Sicherungszungen verschiebbar auf dem Aufnahmestutzen sitzenden Sicherungsringes lassen sich die Zungen radial in ihre Wirkungslage niederdrücken, in welcher ihre inneren Vorsprünge in die lichte Weite des Stutzens hineinragen. Durch Einschnappen des Sicherungsringes in eine durch zwei äussere Vorsprünge der Sicherungszunge geschaffene Nut sind die Zungen in ihrer Wirkungslage gesichert, aus der sie ohne Werkzeug nicht mehr gelöst werden können. Die stirnseitig offene Schlitzung des Aufnahmestutzens stellt aber eine unerwünschte Schwächung des letzteren dar, während Herstellung, Bereitstellung und Handhabung separater Sicherungsringe an sich nachteilig ist. Die vorliegende Erfindung bezweckt deshalb die Schaffung eines Anschlussnippels der genannten Art, der bezüglich Herstellung und Handhabung besonders einfach ist, wobei auch hier das Sicherungselement zwar von Hand in, aber nur durch ein Werkzeug ausser Wirkungslage gebracht werden kann.

Zu diesem Zweck ist der erfindungsgemässe Anschlussnippel dadurch gekennzeichnet, dass der Aufnahmestutzen mindestens eine die durch einen stirnseitigen Randsteg begrenzte Wandausnehmung enthaltende, achsparallele, ebene Aussenfläche aufweist, und in Wirkungslage der Sicherungszunge das vordere Zungenende den Randsteg untergreift.

Die Vermeidung zusätzlicher Elemente zur Sicherung der Sicherungszunge macht deren Handhabung besonders einfach. Der Aufnahmestutzen kann aussen als Mehrkant ausgebildet sein, wobei Ausnehmung und Sicherungszunge an einer der Mehrkantflächen vorgesehen sind. Bei einer besonders vorteilhaften Ausführungsform der Erfindung besitzt die rechteckförmige Sicherungszunge etwa die Wandstärke des Aufnahmestutzens, während der das Gelenk bildende Biegestreifen und das zum Untergreifen des Ausnehmungsrandes in der Wirkungslage bestimmte freie Zungenende von reduzierter Wandstärke sind, und zwar derart, dass die Aussenfläche der in ihre Wirkungslage gedrückten Sicherungszunge etwa in der Ebene der genannten Mehrkantfläche des Aufnahmestutzens liegt. Da im Aufnahmestutzen nur eine einzige, in Umfangsrichtung relativ schmale Wandausnehmung notwendig ist, bedeutet diese Ausnehmung keine merkbare Schwächung des Aufnahmestutzens. Die achsiale Länge dieser Ausnehmung und damit der Sicherungszunge ist zweckmässig so gewählt, dass an der Zungeninnenseite zwei oder drei vorteilhaft als der Stufenbohrung entsprechend konkav gewölbte Querrippen ausgebildete Vorsprünge im Abstand der Rippenteilung des einzusetzenden Isolierrohres Platz finden. Als besonders vorteilhaft hat sich dabei eine Anordnung gezeigt, bei welcher die innenseitigen Rippen der mit ihrem freien Ende gegen das freie Stutzenende hin ragenden Sicherungszunge so angeordnet sind, dass sie in Wirkungslage der Zunge das Isolierrohr durch entsprechenden Angriff an dessen Rippen in den Aufnahmestutzen hinein gegen eine im letzteren angeordnete Dichtungshülse zu drücken versuchen ; die entsprechende, achsiale Gegenkraft der Dichtungshülse drückt dabei das freie Zungenende sicher unter den Randsteg, was ein selbsttätiges Lösen der Zunge aus ihrer Wirkungslage, z. B. durch Erschütterungen oder dergl., praktisch verunmöglicht.

In der beiliegenden Zeichnung ist die Erfindung beispielsweise dargestellt ; darin zeigt :

Figur 1 im Axialschnitt einen Anschlussnippel mit ausser Wirkungslage befindlicher Sicherungszunge,

Figur 2 den Anschlussnippel nach Fig. 1 in Draufsicht auf die in ihrer Wirkungslage befindliche Sicherungszunge,

Figur 3 einen Querschnitt nach der Linie III-III in Fig. 1,

Figur 4 einen Axialschnitt durch den Nippel analog Fig. 1 bei eingesetztem und durch die Zunge gesichertem Isolierrohr,

Figur 5 in Draufsicht analog Fig. 2 eine andere Ausführungsform des Anschlussnippels,

Figur 6 in grösserem Massstab eine Draufsicht auf die Sicherungszunge gemäss Fig. 5,

Figur 7 einen Schnitt nach der Linie E-E in Fig. 6,

Figur 8 eine Stirnansicht zu Fig. 6,

Figur 9 einen Schnitt nach der Linie A-A in Fig. 6, und

Figuren 10 bis 12 je einen Radialschnitt durch den Nippel (ohne Sicherungszunge) nach der Linie B-B bzw. C-C bzw. D-D in Fig. 5.

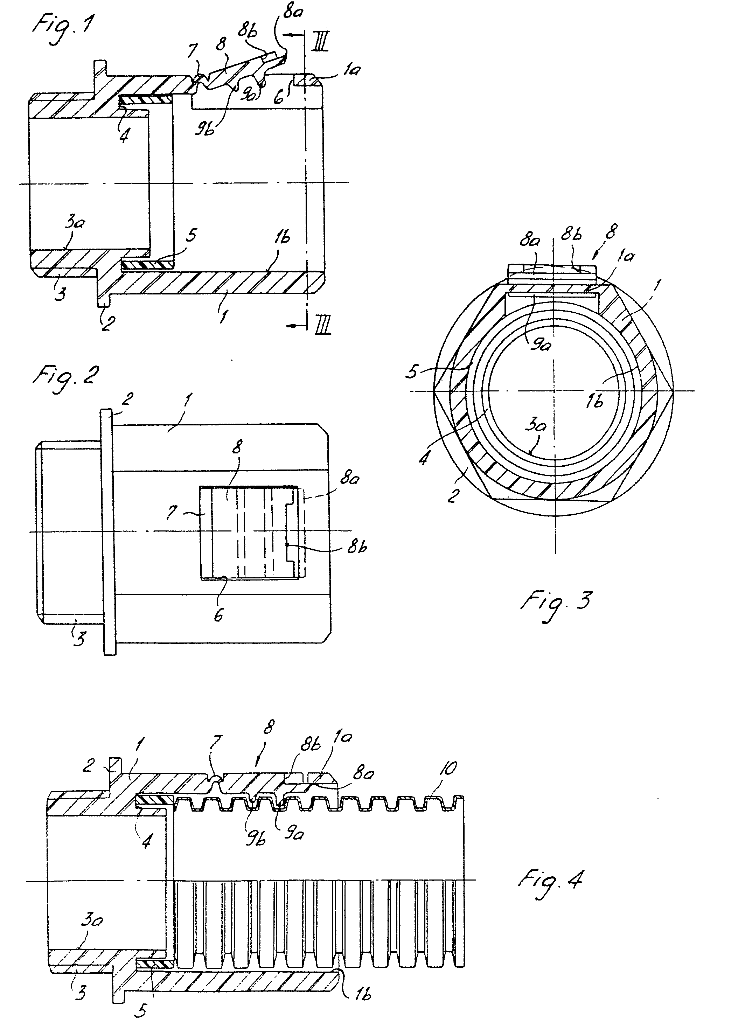

Der gezeichnete Kunststoff-Anschlussnippel besitzt einen Aufnahmestutzen 1, der aussen als 6-Kant ausgebildet ist und durch einen Anschlagflansch 2 von einem der Fixierung des Nippels, z. B. in einer Apparategehäusewand, dienenden koaxialen Gewindestutzen 3 getrennt ist. Am Uebergang der Bohrung 1b des Aufnahmestutzens 1 in die engere Bohrung 3a des Gewindestutzens 3 ist eine ringförmige Rinne 4 vorgesehen, in welcher eine axial in den Aufnahmestutzen 1 hineinragende Dichtungshülse 5 abgestützt ist. An einer der 6-Kantflächen des Aufnahmestutzens 1 ist eine rechteckförmige Wandausnehmung 6 mit quer bzw. achsparallel laufenden Seiten vorgesehen, die vom Stirnende des Aufnahmestutzens 1 durch einen Randsteg 1a getrennt ist. Die Wandstärke dieses eine ebene Innenfläche aufweisenden Randsteges 1a ist geringer als die kleinste Wandstärke des Aufnahmestutzens 1. Längs des dem Randsteg 1a gegenüberliegenden Querrandes der Ausnehmung 6 ist mittels eines nach aussen gewölbten, in seiner Dicke gegenüber der Stutzenwandstärke stark reduzierten Biegestreifens 7 eine in die Ausnehmung 6 passende Sicherungszunge 8 angelenkt. Der federelastische Biegestreifen 7 ist so geformt, dass er in entspanntem Zustand die Sicherungszunge 8 in ihrer unwirksamen Lage (Fig. 1, 3) hält, in der sie spitzwinklig zu der die Ausnehmung 8 aufweisenden Stutzenfläche aus der Ausnehmung 6 herausragt. Das freie Stirnende der Sicherungszunge 8 ist mit einer angeschrägten Lippe 8a versehen, deren Wandstärke gegenüber jener des Hauptteils der Zunge 8 um die Dicke des Randsteges 1b reduziert ist. An die Lippe 8a schliesst eine mittlere Randvertiefung 8b an. Die Sicherungszunge 8, deren Wandstärke im übrigen etwa der kleinsten Wandstärke des Aufnahmestutzens 1 entspricht, ist an ihrer Innenseite mit zwei Querrippen 9a, 9b ungleicher Höhe versehen. Die Rippenhöhen sind so gewählt, dass sie in der unwirksamen Lage der Sicherungszunge 8 ausserhalb der lichten Weite der Stutzenbohrung 1a liegen. Dabei entspricht der Querschnitt der höheren, der Lippe 8a näher liegenden Querrippe 9a dem achsialen Querschnitt der Umfangsnuten des in den Aufnahmestutzen 1 des Nippels einzusetzenden Isolierrohres, während der Querrippenabstand der Teilung der Umfangsrippen des Isolierrohres entspricht.

Beim Montieren des Nippels auf einem (im Durchmesser passenden) umfangsgerippten Isolierrohr 10 (Fig. 4), wird das Rohrende bis zum Anschlag am Dichtungsring 5 in den Aufnahmestutzen 1 eingeführt. Die axiale Länge dieses elastischen Dichtungsringes 5 ist so gewählt, dass beim druckfreien Anliegen des Isolierrohres die im Bereich der Querrippen 9a, 9b der Sicherungszunge 8 liegenden Umfangsnuten des Isolierrohres 10 etwa um den halben Abstand der Querrippen 9a, 9b zu den letzteren achsial versetzt sind. Nun wird unter entsprechender Kompression bzw. Deformation des Dichtungsringes 5 das Isolierrohr 10 soweit nach innen gedrückt, bis zwei Umfangsnuten des Isolierrohres 10 mit den Querrippen 9a, 9b radial fluchten, worauf die Zunge 8 durch Fingerdruck entgegen der Federwirkung des Biegestreifens 7 in die Wandausnehmung 6 hineingedrückt wird ; dabei greifen die Querrippen 9a, 9b der Sicherungszunge 8 in die betreffenden Umfangsnuten des Isolierrohres 10 ein, und die Lippe 8a kommt radial unter den Randsteg 1b zu liegen. Die Oberseite der Sicherungszunge 8 ist dabei etwa in Flucht mit der ebenen Aussenfläche des Aufnahmestutzens 1. Beim Loslassen des Isolierrohres 10 drückt der komprimierte Dichtungsring 5 das Isolierrohr 10 von sich weg und somit über die Rohrrippen und die Querrippen 9a, 9b die Sicherungszunge 8 unter leichter Deformation des Biegestreifens 7 axial gegen den Randsteg 1b hin, wodurch die Lippe 8a derart weit unter den Randsteg 1b greift, dass diese Lippe und somit die Sicherungszunge 8 nur noch mittels eines an der Randvertiefung 8b anzusetzenden Werkzeugs, z. B. eines Schraubenziehers, aus dieser Wirkungslage wieder herausbewegt werden kann. Damit ist das Isolierrohr 10 im Aufnahmestutzen 1 axial festgelegt und in dieser Lage einwandfrei gesichert.

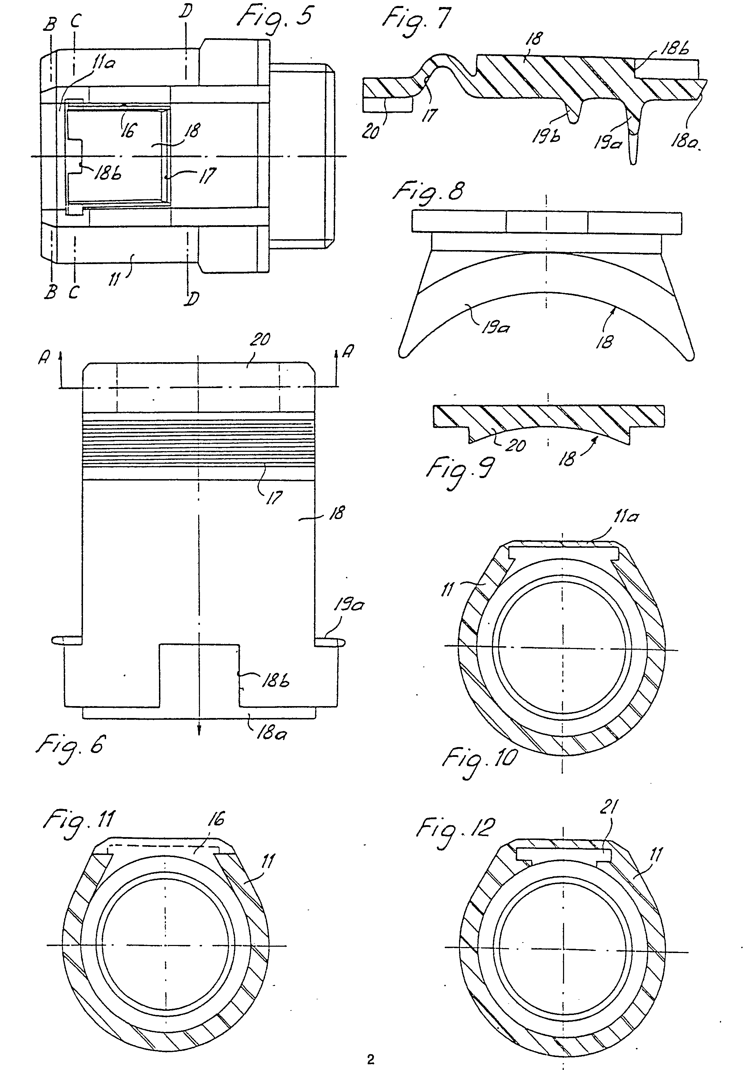

Bei dem in den Fig. 5 bis 12 gezeigten Beispiel ist der Aufnahmestutzen 11 ebenfalls mit einer achsparallelen äusseren Flachseite versehen, in der sich die Ausnehmung 16 befindet, die stirnseitig durch einen ebenen, relativ dünnwandigen Randsteg 11a begrenzt ist. Im Gegensatz zum erstbeschriebenen Beispiel ist hier die Sicherungszunge 18 nicht einstückig am Aufnahmestutzen angeformt, sondern ist mittels einer an den Biegestreifen 17 anschliessenden Endleiste 20, die in eine entsprechende Ausnehmung 21 der Stufenwand eingreift, fest mit dem Nippel verbunden. Die Wandausnehmung 16 ist in Achsrichtung durch schräg nach innen auseinanderlaufende Randflächen begrenzt. Entsprechend schräg verlaufen die Seiten der beiden ungleich hohen Querrippen 19a, 19b der Sicherungszunge 18. Die Innenkante der höheren der beiden Querrippen ist der Rundung des Isolierrohres entsprechend konkav gewölbt. Dadurch ist gewährleistet, dass diese Querrippe 19a in ihrer ein eingeführtes Isolierrohr sichernden Wirkungslage nicht nur tangential, sondern über einen relativ grossen Umfangswinkel in eine entsprechende Umfangsnut des Isolierrohres eingreift. Die abgesetzte Lippe 18a am freien Zungenende der Sicherungszunge 18 ist analog dem erstbeschriebenen Beispiel angeschrägt ; auch hier ist eine mittlere Randvertiefung 18b vorgesehen, deren Boden mit der Oberseite der Lippe 18a fluchtet.

Die Funktion dieser Sicherungszunge 18 entspricht im übrigen genau jener des erstbeschriebenen Beispiels. Da die Sicherungszunge 18 in ihrer unwirksamen Lage (analog Fig. 1) durch den Biegestreifen 17 leicht ansteigend aus der Wandausnehmung 16 herausgehalten wird, kann sie bei eingesetztem und gegen den Dichtungsring gedrücktem Isolierrohr nach innen gedrückt werden, sodass die Querrippen 19a, 19b in Umfangsnuten des Isolierrohres eingreifen und die Lippe 18a den Randsteg 11b untergreift. Die in diese Wirkungslage eingerastete Sicherungszunge 18, d. h. ihre Lippe 18a, kann wiederum nur mit Hilfe eines in der Vertiefung 18b anzusetzenden Werkzeugs ausser Eingriff mit dem Randsteg 11a gebracht werden.

## Patentansprüche

1. Anschlussnippel aus Kunststoff für umfangsgerippte Isolierrohre, mit einem einer Wandausnehmung des Rohraufnahmestutzens des Nippels zugeordneten Sicherungselement, das in seiner Wirkungslage mit inneren, zum Eingriff in Umfangsnuten des Isolierrohres bestimmten Vorsprüngen in die lichte Weite des Aufnahmestutzens hineinragt und gegen werkzeugloses Entfernen aus dieser Lage gesichert ist, wobei eine in die Wandausnehmung passende, mit den inneren Vorsprüngen (9a, 9b ; 19a, 19b) versehene Sicherungszunge (8, 18) am hinteren Ende und quer zur Nippelachse durch einen Biegestreifen (7, 17) fest an der Stutzenwand angelenkt ist, welche Sicherungszunge vom Biegestreifen mit ihrem freien Ende (8a, 18a) spitzwinklig zur ebenen Wandfläche aus der Wandausnehmung herausragend ausser Wirkungslage gehalten ist, während sie durch radiales Niederdrücken entgegen Federwirkung des Biegestreifens in Wirkungslage bringbar ist, in welcher ihre Vorsprünge in die lichte Weite des Aufnahmestutzens ragen, dadurch gekennzeichnet, dass der Aufnahmestutzen (1, 11) mindestens eine die durch einen stirnseitigen Randsteg (1a, 11a) begrenzte Wandausnehmung (6, 16) enthaltende, achsparallele, ebene Aussenfläche aufweist, und in Wirkungslage der Sicherungszunge das vordere Zungenende (8a, 18a) den Randsteg (1a, 11a) untergreift.

2. Anschlussnippel nach Anspruch 1, dadurch gekennzeichnet, dass der Aufnahmestutzen (1, 11) einen elastischen, vom Isolierrohrende achsial zu belastenden Dichtungsring (5) enthält.

3. Anschlussnippel nach Anspruch 2, dadurch gekennzeichnet, dass die Sicherungszunge (8, 18) am freien Ende eine um die Wandstärke des Randsteges (1a, 11a) abgesetzte Lippe (8a, 18a) zum Untergreifen des Randsteges aufweist.

4. Anschlussnippel nach Anspruch 3, dadurch gekennzeichnet, dass die Sicherungszunge mittels einer an den Biegestreifen (17) anschliessenden Randleiste, die in eine Wandausnehmung (21) des Aufnahmestutzens (11) eingesetzt ist, fest mit dem Stutzen verbunden ist.

5. Anschlussnippel nach einem der Ansprüche 1 bis 4, dadurch gekennzeichnet, dass die inneren, als Querrippen (9a, 9b ; 19a, 19b) ausgebildeten Vorsprünge der Sicherungszunge (8, 18) ungleiche Höhe aufweisen.

6. Anschlussnippel nach Anspruch 5, dadurch gekennzeichnet, dass wenigstens die höhere, dem freien Zungenende näher liegende Querrippe (19a) eine kreisbogenförmig konkav gewölbte Innenkante aufweist, während die Seitenkanten dieser Querrippe schräg auseinanderlaufen.

## Claims

1. Coupling nipple of plastics material for peripherally ribbed insulating tubes, comprising a securing element matching a wall recess of the tube reception connector of the nipple, which in its operating position extends with internal projections into the aperture of the reception connector and is secured in this position against removal without tools, a securing tongue (8, 18) fitting into the wall recess and provided with the internal projections (9a, 9b ; 19a, 19b) being coupled firmly to the surface of the connector at the rear extremity and transversely to the axis of the nipple by means of a bending strip (7, 17), which securing tongue is held by the bending strip with its free extremity (8a, 18a) at an acute angle to the plane wall surface and projecting out of the wall recess in the inoperative position, whereas it may be placed in the operative position by being pressed down radially against the spring action of the bending strip, in which its projections extend into the aperture of the reception connector, characterised in that the reception connector (1, 11) has at least one axially parallel external plane surface containing the wall recess (6, 16) delimited by front side marginal web (1a, 11a) and, in the operative position of the securing tongue, the front tongue extremity (8a, 18a) engages under the marginal web (1a, 11a).

2. Coupling nipple according to claim 1, characterised in that the reception connector (1, 11) contains an elastic sealing ring (5) which is to be loaded axially at the extremity of the insulating tube.

3. Coupling connector according to claim 2, characterised in that the securing tongue (8, 18) has a lip (8a, 18a) rebated by the wall thickness of the marginal web (1a, 11a) at the free extremity, for engaging under the marginal web.

4. Coupling nipple according to claim 3, characterised in that the securing tongue is firmly joined to the connector by means of a marginal bar inset in a wall recess (21) of the reception connector (11) and contiguous to the bending strip (17).

5. Coupling nipple according to one of the claims 1 to 4, characterised in that the internal projections of the securing tongue (8, 18) constructed as transverse ribs (9a, 9b ; 19a, 19b) have unequal heights.

6. Coupling nipple according to claim 5, characterised in that at least the higher transverse rib (19a) lying closer to the free tongue extremity has an inner edge curved concavely in arcuate form, whereas the lateral edges of this transverse rib diverge obliquely.

## Revendications

1. Raccord fileté en plastique pour tuyau isolant fileté extérieurement, avec un élément de sécurité adjoint à un évidement du support d'introduction de tuyau du raccord, ledit raccord fileté, en position de fonctionnement, comporte intérieurement certaines saillies dans le diamètre intérieur du support d'introduction, lesdites saillies étant destinées à s'engager dans les rainures de filetage du tuyau isolant, de façon à empêcher tout détachage de cette position sans l'aide d'outil, alors qu'une languette de sécurité (8, 18) s'adaptant à l'évidement, dotée des saillies intérieures (9a, 9b ; 19a, 19b) est articulée solidement à l'extrémité postérieure et en travers de l'axe du raccord par une bande souple (7, 17) à la paroi du support, laquelle languette de sécurité est maintenue, en position de non-fonctionnement, par la bande souple, avec son extrémité libre saillante en dehors de l'évidement, à angle aigu par rapport à la surface plane de la paroi, et qu'elle peut être mise en position de fonctionnement par une pression radiale contre l'effet de ressort de la bande souple, position dans laquelle ses saillies pénètrent dans le diamètre intérieur du support d'introduction, caractérisé en ce que le support d'introduction (1, 11) présente au moins une surface externe plane, parallèle à l'axe, comportant un évidement (6, 16) limité par un rebord frontal (1a, 11a), et en ce que, en position de fonctionnement de la languette de sécurité, l'extrémité de languette antérieure (8a, 18a) se fixe contre le rebord (1a, 11a).

2. Raccord fileté selon la revendication 1, caractérisé en ce que le support d'introduction (1, 11) contient un joint étanche (5) élastique exerçant une poussée axiale sur l'extrémité du tuyau isolant.

3. Raccord fileté selon la revendication 2, caractérisé en ce que la languette de sécurité (8, 18) comporte à son extrémité libre une lèvre (8a, 18a) surbaissée de l'épaisseur du rebord (1a, 11a) pour se fixer sous le rebord.

4. Raccord fileté selon la revendication 3, caractérisé en ce que la languette de sécurité est introduite au moyen d'un rebord terminal relié à une bande souple (17) dans un évidement (21) du support d'introduction (11) et fermement fixée audit support.

5. Raccord fileté selon l'une des revendications 1 à 4, caractérisé en ce que les saillies intérieures ayant une forme de nervure de filetage (9a, 9b ; 19a, 19b) de la languette de sécurité (8, 18) présentent des hauteurs différentes.

6. Raccord fileté selon la revendication 5, caractérisé en ce qu'au moins la plus haute nervure (19a) se trouvant près de l'extrémité libre de la languette présente un bord interne cintré concavement en arc de cercle, alors que les bords latéraux de cette nervure s'écartent de biais.

Fig.1

Fig.2

Fig.3

Fig.4

1

Fig. 5

Fig. 6

Fig. 7

Fig. 8

Fig. 9

Fig. 10

Fig. 11

Fig. 12